# EUROPÄISCHE PATENTSCHRIFT

(11) **EP 0 927 621 B1**
(45) Veröffentlichungstag und Bekanntmachung des Hinweises auf die Patenterteilung: **27.10.2004**
(21) Anmeldenummer: 98123104.6
(22) Anmeldetag: 03.12.1998
(51) Int. Cl.: B29C 45/27, B29C 45/30

(54) **Heisskanalabschnitt, insbesondere Heisskanaldüse für eine Spritzgiessmaschine oder Kunststoffspritzgiessform**
Hot runner, in particular a hot runner for an injection moulding machine or plastic injection mould
Système à canal chaud, en particulier pour une machine à mouler par injection ou moule d'injection de matières plastiques

(30) Priorität: 31.12.1997 DE 19758322; 31.12.1997 DE 19758323
(43) Veröffentlichungstag der Anmeldung: 07.07.1999
(73) Patentinhaber: EWIKON Heisskanalsysteme GmbH & Co. KG, 32269 Kirchlengern (DE)
(72) Erfinder: Braun, Peter, Dr., 35410 Hungen (DE)
(74) Vertreter: Stracke, Alexander, Dipl.-Ing.

(56) Entgegenhaltungen:
- EP-A- 0 137 888
- EP-A- 0 361 044

## Beschreibung

Die Erfindung bezieht sich auf einen Heißkanalabschnitt nach dem Oberbegriff des Anspruchs 1.

Eine gattungsgemäße Heißkanaldüse ist aus der Fig. 5 der EP 0 137 888 A2 bekannt. Hier sind äußere Hülsen und ein innerer Heizstab vorgesehen, die durch eine Isoliermasse voneinander getrennt sind. Die Schmelze fließt durch einen Ringkanal um das äußere Heizrohr bzw. die Hülsen.

Derartig gestaltete Düsen oder Heißkanalabschnitte weisen den Mangel auf, daß die geteilten äußeren Hülsen flanschartige Vergrößerungen aufweisen, die durch eine elektrische Isolierung voneinander getrennt sind, wobei die Isolierung jedoch bis an den die Flansche durchdringenden Strömungskanal reicht, so daß die Isolierungen mit der Schmelze in Berührung kommen. Damit ist die Isolierung allen Kräften und Belastungen ausgesetzt, die sich aus der Konstruktion und den Betriebsbelastungen, wie den sprunghaft wechselnden extrem hohen Drücken der strömenden Schmelze ergeben. Dieses ist besonders nachteilig, wenn die Schmelze Festkörper, wie z.B. Glasfaseranteile enthält.

Die durch die beginnende Zerstörung der Isolierschichten entstehenden Hohlräume werden von der Schmelze ausgefüllt. Dieses läßt tote Räume entstehen und erschwert Farb- und Materialwechsel, wenn derartige Wechsel notwendig werden.

Die in die durch die Zerstörung der Isolierung entstehenden Spalte eindringende Schmelze wirkt auf die so frei werdenden Flächen der Flansche und drückt diese auseinander, so daß die Schmelze eindringen kann. Dieses kann zur Unbrauchbarkeit der Düse führen.

Die nicht gattungsgemäße EP 0 361 044 A2 zeigt eine außenbeheizte Düse, wobei der Schmelzkanal durch einen zentralen, im Querschnitt kreisförmigen bzw. insgesamt zylindrischen Durchströmkanal ausgebildet wird, das von einem Rohr begrenzt wird. Hier umgibt die Heizwendel das Rohr, so dass die eingangs geschilderten Probleme nicht auftreten können, denn das Rohr kann ohne weiteres durchgehend metallisch ausgebildet werden. Das Problem der Zu- und/oder Ableitung elektrischen Stroms zu einem mittigen Heizstab besteht hier nicht.

Die Erfindung hat die Aufgabe, die geschilderten Nachteile des gattungsgemäßen Standes der Technik zu vermeiden, wonach die Isolierung bis an den Strömungskanal reicht, so daß die Isolierung mit der Schmelze in Berührung kommt.

Gemäß der Erfindung wird diese Aufgabe durch den Gegenstand des Anspruchs 1 gelöst.

Vorteilhafte Ausgestaltungen sind den Unteransprüchen zu entnehmen.

Bei einer vorteilhaften Ausführungsform wird die gesamte Länge der Durchtrittsöffnung ununterbrochen vom gleichen Werkstoff gebildet.

Ausführungsformen der Erfindung werden nachfolgend anhand von Zeichnungen näher erläutert.

Es zeigen:
- Figur 1: die Teilansicht einer Kunststoffspritzgießform im Schnitt,
- Figur 2: eine Düse in Schnittdarstellung,
- Figur 3: eine perspektivische Explosionsdarstellung der wichtigsten Bauteile,
- Figur 4: eine abgewandeltes Ausführungsbeispiel einer Düse nach Fig. 3,
- Figur 5: die wichtigsten Bauteile eines weiteren Ausführungsbeispieles in perspektivischer Explosionsdarstellung,
- Figur 6: eine weitere Ausführungsform einer elektrisch betriebenen Heißkanaldüse im Schnitt,
- Figur 7: eine Schnittdarstellung durch die Heißkanaldüse gemäß der Linie II-II in Fig. 6,
- Figuren 8 bis 11: perspektivische Ansichten von Einzelteilen der Heißkanaldüse von jeweils anderen Ausführungsbeispielen,
- Figur 12: eine Darstellung eines weiteren Ausführungsbeispieles in Explosionsdarstellung.

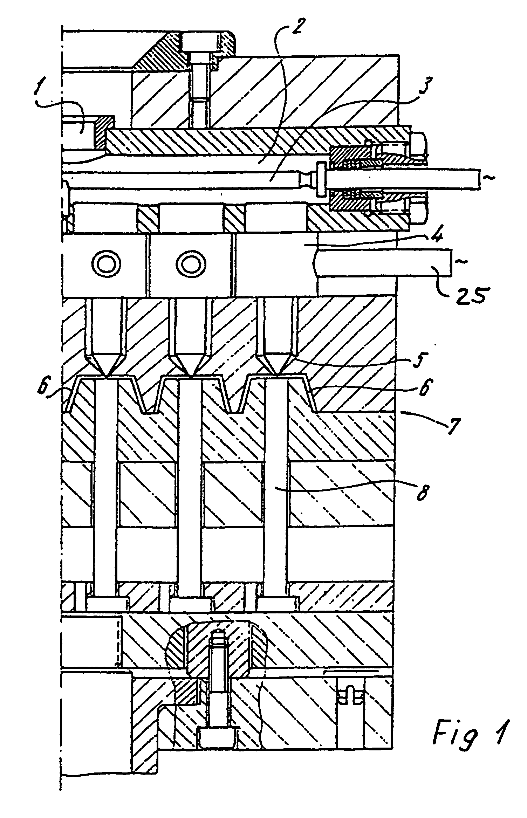

Die in Figur 1 dargestellte Kunststoffspritzgießform weist eine Angußbuchse 1 für die Maschinendüse auf, über die die Schmelze in einen Verteilerkanal 2 eintritt, in dem ein Heizdraht 3 zur Aufrechterhaltung der Temperatur der Schmelze angeordnet ist. Über den Verteilerkanal 2 gelangt die Schmelze in beheizbare Düsen 4 und Austrittsöffnungen 5 in die Formnester 6. In der Ebene 7 wird die Form geöffnet, um die Spritzlinge mittels der Ausstoßer 8 entfernen zu können.

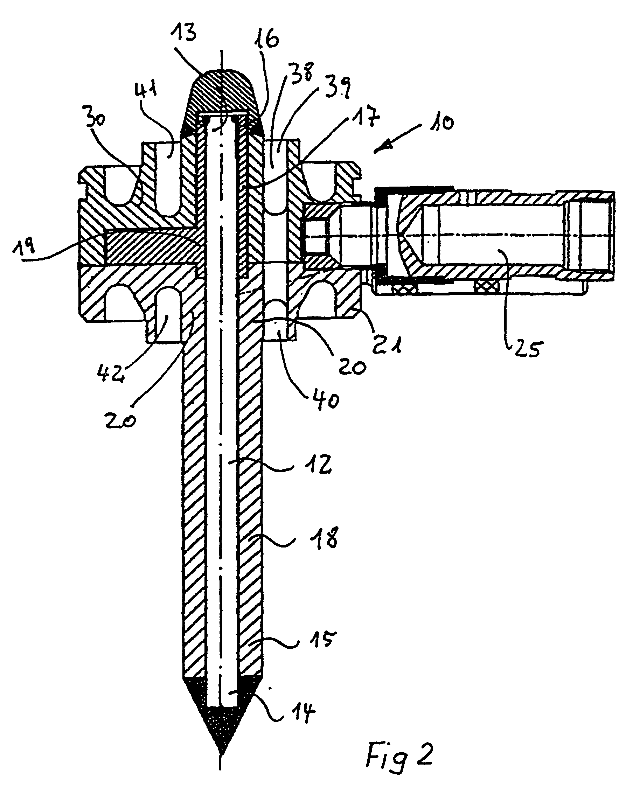

Figur 2 zeigt eine mit 10 bezeichnete Düse, die in Fig. 1 allgemein mit 4 gekennzeichnet wurde. Diese Düse wird aus einem zentralen Heizleiter 12 gebildet, der an seinen freien Enden 13 mit dem freien Ende 16 einer ersten Hülse 17 elektrisch verbunden ist, wobei der Heizleiter 12 und die Hülse über den gemeinsamen Längenabschnitt elektrisch voneinander isoliert sind.

Entsprechend ist der Heizleiter 12 an seinem anderen freien Ende 14 mit dem freien Ende 15 einer zweiten Hülse 18 elektrisch verbunden, wobei der Heizleiter 12 und die Hülse 18 über den gemeinsamen Längenabschnitt ebenfalls elektrisch voneinander isoliert sind.

An den zueinander gerichteten Enden 19,20 der Hülsen 17,18 sind ein- oder mehrstückig mit der Hülse 18 verbundene, im Durchmesser größere Bauteile ausgebildet. So ist an der Hülse 18 ein Flansch 21 ausgebildet.

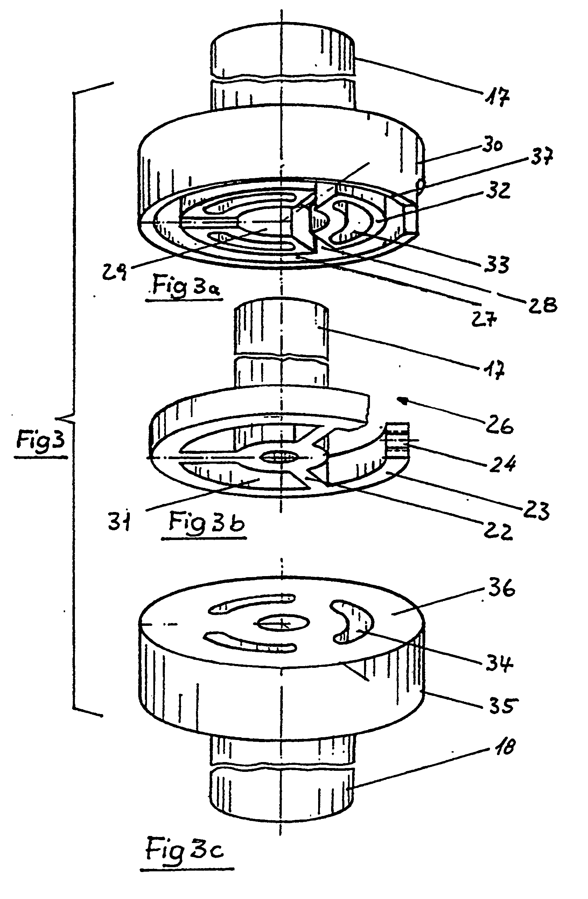

Zum besseren Verständnis von Fig. 2 zeigt Fig. 3 in einer Art Explosionsdarstellung die wesentlichen Einzelteile, die insgesamt als Fig. 3 gekennzeichnet sind.

Hierin zeigt Fig. 3b die Hülse 17 in perspektivischer Darstellung. Diese Hülse ist nahe dem einen Ende mit Strombrücken 22 versehen, die die Hülse mit einem Verteilerring 23 verbinden. Der Verteilerring weist ein Gewinde 24 auf, welches mit einem in Fig. 2 dargestellten Verbindungsmittel 25, z.B. einer Steckverbindung 25 verbunden ist.

Das ein- oder mehrstückig aus den Elementen Hülse 17, Strombrücken 22 und Verteilerring 23 gebildete Bauteil 26 ist seiner Kontur entsprechend in Ausnehmungen 27, 28, 29 des Mantelflansches 30 elektrisch isoliert eingebettet. Zwischen den Strombrücken 22 sind Durchbrechungen 31 ausgebildet, die von durch Wandungen 32 gebildete Durchströmkanäle 33 aufnehmen. Diese Durchströmkanäle durchdringen den Mantelflansch und münden an Durchströmkanäle 34, die den Flansch 35 durchdringen. Durch diese Maßnahmen kommt es in Montagelage zu einer Anlage zwischen der Stirnwand 36 des Flansches 35 und den Stirnflächen der Wandungen 32 und der äußeren Kreisringfläche 37 des Mantelflansches 30. Die sich plan gegenüberliegenden Flächen 32, 36, 37 sind im Endzustand stoffschlüssig miteinander verbunden, insbesondere verlötet.

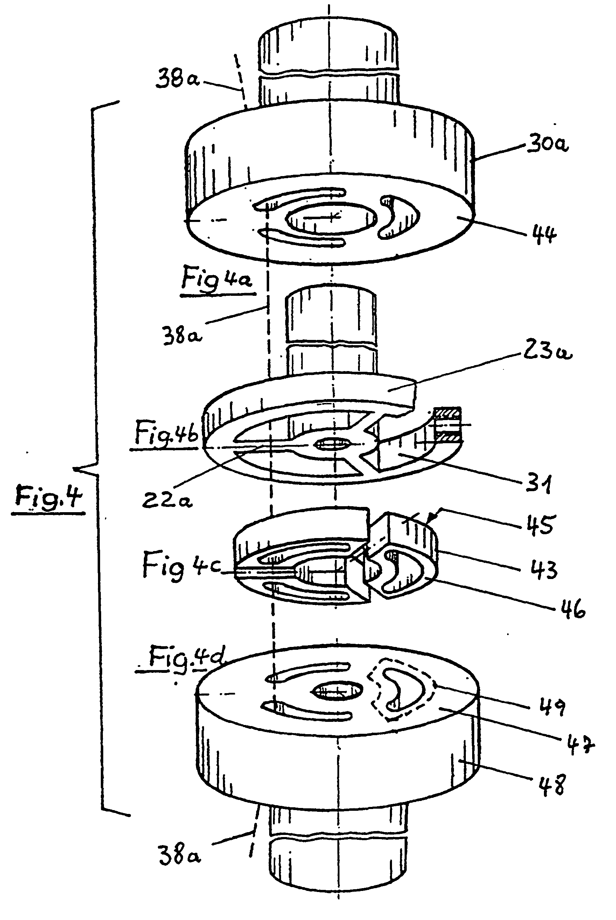

Durch diese Maßnahmen entstehen Strömungskanäle 38 (Fig. 2 und 4), die vom Schmelzeeintritt 39 bis zum Schmelzeaustritt ausschließlich von metallischen Wandungen begrenzt werden. Um die Länge der Strömungskanäle so kurz wie möglich zu gestalten, sind am Schmelzeeintritt und Schmelzeaustritt 40 umlaufende Nuten 41,42 ausgebildet, die dem Druckverlust entgegenwirken.

Figur 4 zeigt ein weiteres Ausführungsbeispiel der Erfindung, welches darlegt, daß die Durchströmkanäle im Bereich der Strombrücken 22a und dem Verteilerring 23a nicht integrierter Teil des Mantelflansches 30a sein müssen, sondern selbständig gefertigte Kanalabschnitte 43 sein können. Auch bei diesem Ausführungsbeispiel wird im Endfertigungszustand der Düse ein Strömungskanal 38a gebildet, der ausschließlich von metallischen Wandungen gebildet wird. Gemäß diesem Ausführungsbeispiel ist die Stirnfläche 44 des Mantelflansches 30a mit den Stirnflächen 45 metallisch verbunden und die Stirnflächen 46 mit den Stirnflächen 47 des Flansches 48.

Es liegt im Rahmen der Erfindung, daß die Kanalabschnitte 43, die Flansche 30a und/oder 48 ganz oder teilweise der Länge nach durchdringen. In diesem Falle ist eine der Kontur der Kanalabschnitte 43 entsprechende Ausnehmung 49, die in Fig. 4c gestrichelt angedeutet ist, vorgesehen.

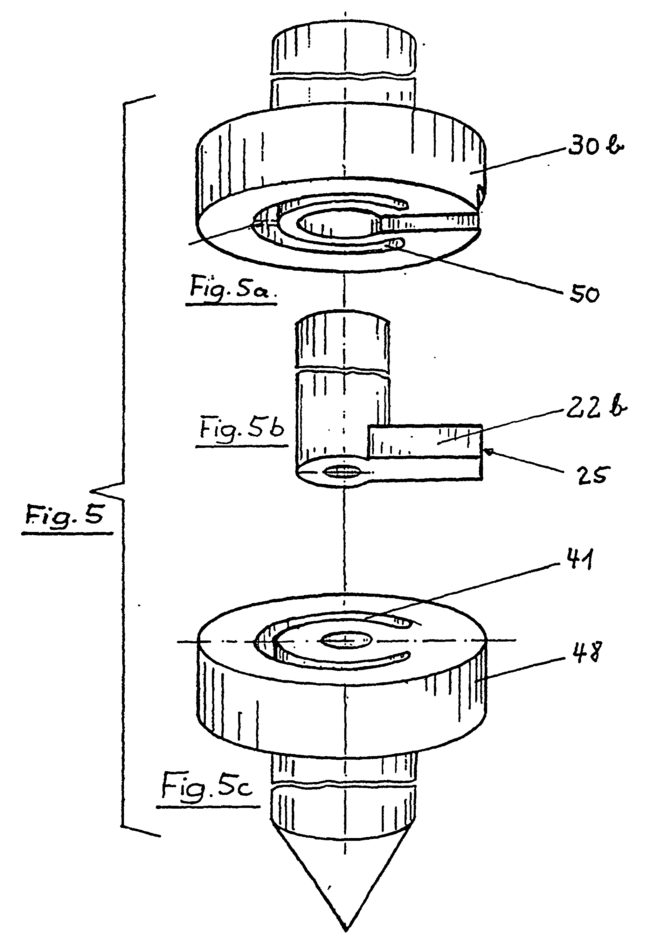

Ein weiteres Ausführungsbeispiel ist in Fig. 5 dargestellt. Auch diese Darstellung ist eine Art Explosionsdarstellung und zeigt, daß eine Strombrücke 22b auch in einfacher Ausführung ausgestattet sein kann. In diesem Ausführungsbeispiel ist die Strombrücke in Anlehnung an das Ausführungsbeispiel gemäß Fig. 3 in den Mantelflansch 30b elektrisch isoliert eingebettet. Dieses Ausführungsbeispiel hat den Vorteil, einen nahezu umfangsgeschlossenen Durchströmkanal 50,51 auszubilden, der lediglich durch einen Bereich zur Passage der Strombrücke 22b unterbrochen ist und der mit der mit dem Verbindungsmittel 25 entsprechend Fig. 1 elektrisch verbunden ist.
Es liegt im Rahmen der Erfindung, einen dünnwandigen Stabilisierungssteg 52 in einem der beiden der Flansch 30,48 vorzusehen. Die zuvor beschriebenen Ausführungsformen haben sich in der Praxis als besonders vorteilhaft erwiesen. Dieses soll nicht bedeuten, daß sich die Erfindung darauf beschränkt.

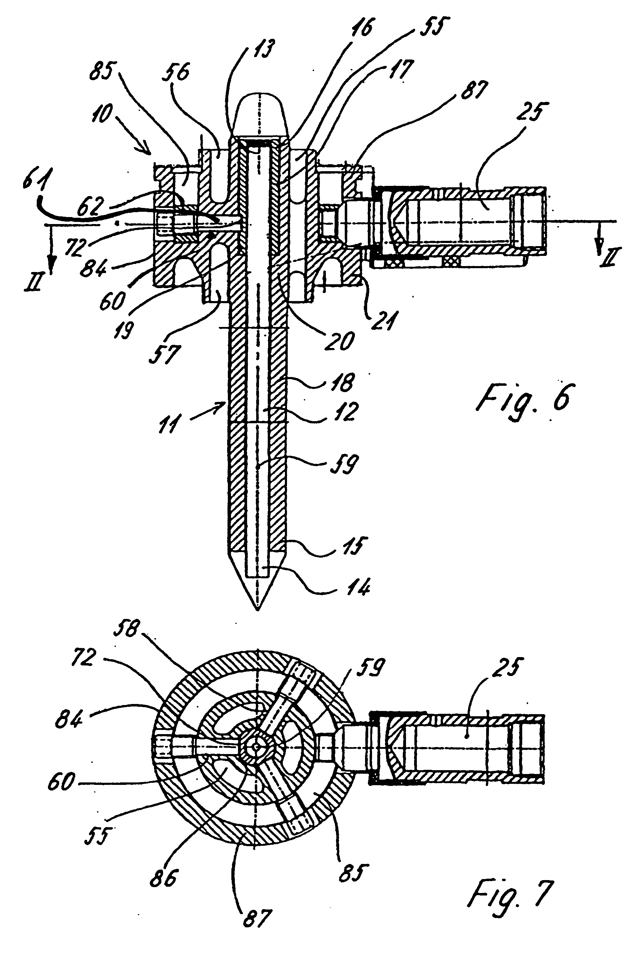

Figur 6 zeigt eine mit 10 bezeichnete Düse, die in Fig. 1 allgemein mit 4 gekennzeichnet wurde. Diese Düse wird aus einem zentralen Heizleiter 12 gebildet, der an seinen freien Enden 13 mit den freien Enden 16 einer ersten Hülse 17 elektrisch verbunden ist, wobei der Heizleiter 12 und die Hülse über den gemeinsamen Längenabschnitt elektrisch voneinander isoliert sind.

Entsprechend ist der Heizleiter 12 an seinem anderen freien Ende 14 mit dem freien Ende 15 einer zweiten Hülse 18 elektrisch verbunden, wobei der Heizleiter 12 und die Hülse 18 über den gemeinsamen Längenabschnitt ebenfalls voneinander isoliert sind.

An den zueinander gerichteten Enden 19,20 der Hülsen 17,18 ist ein- oder mehrstückig ein mit der Hülse 17,18 verbundenes, im Durchmesser größeres Bauteil ausgebildet. So ist z.B. an der Hülse 18 ein Flansch 21 ausgebildet.

Benachbart der Hülse 18 ist in dem Flansch 21 mindestens eine ihn der Länge nach durchdringende Durchtrittsöffnung 55 und mindestens ein Steg 28, bevorzugt jedoch mindestens zwei Durchtrittsöffnungen und mindestens zwei Stege ausgebildet, so daß die Schmelze durch die Durchtrittsöffnungen hindurchfließen kann.

Zwischen den Durchtrittsöffnungen befinden sich jeweils Stege 58, die den Flansch 21 mit der Hülse 18 verbinden. Die Stege weisen Kanäle 60 auf, die den Flansch 21 von der äußeren Mantelfläche 84 des Flansches bis zur Innenbohrung 86 der Hülse 18 radial durchqueren. Die Kanäle kreuzen dabei eine in de Stirnseite des Flansches ausgebildete, ganz oder teilweise umlaufend ringförmige Nut 85, in der im montierten Zustand ein Stromverteiler zum Flansch elektrisch isoliert einliegt. In den Kanälen sind Strombrücken 61 elektrisch isoliert angeordnet, die eine elektrisch leitende Verbindung zwischen dem Stromverteiler 62 und der Hülse 17 bilden.

Somit wird ein Stromkreis ausgebildet, der über folgende Stationen führt.

Das elektrische Verbindungsmittel 25 ist vorzugsweise als Steck- oder Schraubkontakt ausgebildet und dient zur Verbindung mit den Stromversorgungskabeln o.dgl.
Das Verbindungsmittel ist mit dem Stromverteiler elektrisch verbunden, über den der Strom durch mit ihm verbundene Strombrücken, die mit der Hülse 17 elektrisch verbunden sind, fließt.
Die Hülse ist an ihrem freien Ende 16 mit dem freien Ende 13 des Heizleiters 12 elektrisch leitend verbunden. Das andere Ende 14 des Heizleiters ist mit dem Ende 15 der zweiten Hülse 18 verbunden, die ihrerseits mit dem Flansch verbunden ist, so daß der Strom gegen Masse abfließen kann.

Um den Strömungswiderstand in den Durchströmöffnungen 55 so gering wie möglich zu halten, können Ringnuten 56,57 vorgesehen werden, die die Länge der Stege begrenzen.

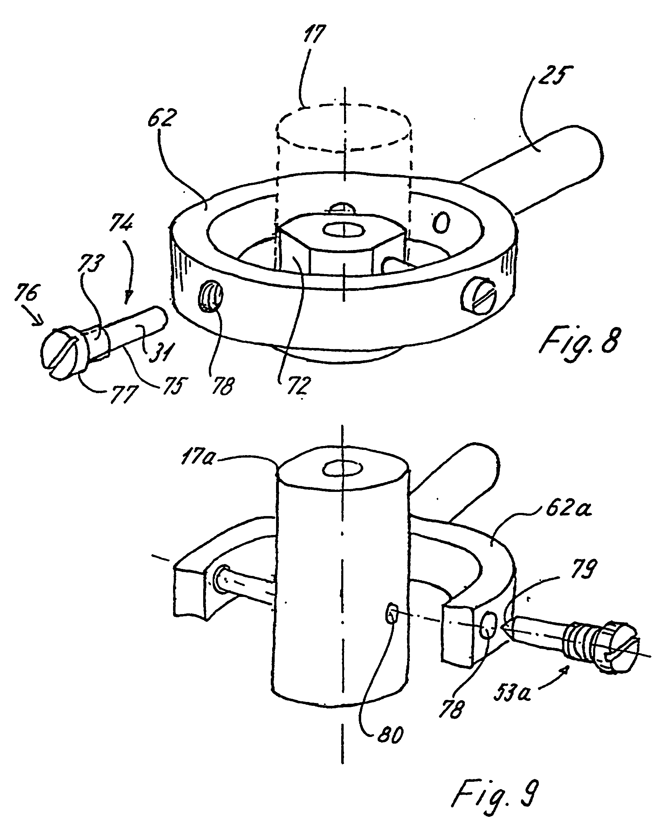

Zur besseren Übersicht sind einige Ausführungsformen in den Figuren 8 bis 11 perspektivisch dargestellt, wobei jeweils nur die Hülse 17, die Strombrücken 61,53, die Stromverteiler 62 und die Verbindungsmittel 25 dargestellt sind.

Figur 8 zeigt die genannten Bauteile entsprechend der Ausführungsform gemäß Fig. 6. Man erkennt die Hülse 17, an der Flächen 72 ausgebildet sind, die einem großflächigeren Kontakt der Strombrücken dienen. In diesem Ausführungsbeispiel sind die Strombrücken als Schraubkörper 74 gestaltet, die aus einem zylindrischen Teil 75, dem sich ein Gewindeabschnitt 73 anschließt, besteht. An dem zum Kontakt mit der Hülse vorgesehen entgegengesetzten Ende 76 der Strombrücke kann ein Kopf 77 mit einem Schlitz o.dgl. zum Eingriff eines Drehwerkzeuges ausgebildet sein. Mit ihrem Gewinde werden die Strombrücken in entsprechende Gewindebohrungen 78 des Stromverteilers mit gleichen Drehmomenten eingeschraubt. Hierdurch entstehen an allen Strombrücken gleiche Kontaktdrücke, die durch die elastische Verformbarkeit des Stromverteilers begünstigt werden.

Figur 9 zeigt ein anderes Ausführungsbeispiel. In diesem Falle ist die Hülse 17a von einem im wesentlichen halbkreisförmigen Stromverteiler 62a umgeben, wobei in diesem Falle zwei Strombrücken 53a vorgesehen sind, die in an den freien Enden des halbkreisförmigen Stromverteilers angeordneten Gewindebohrungen 78 einschraubbar sind und an ihren der Hülse zugewandten Ende mit einer kegelförmigen Spitze 79 ausgestattet sind, die in entsprechend kegelförmig ausgebildete Ausnehmungen 80 eingreifen. Auch in diesem Ausführungsbeispiel ist die Strombrücke elastisch verformbar, so daß beim Einschrauben der Strombrücken ein entsprechender Kontaktdruck entsteht. Gleichzeitig werden durch das Ineinandergreifen von Spitze 79 und Ausnehmung 80 die Hülse und die Strombrücke zueinander festgelegt.

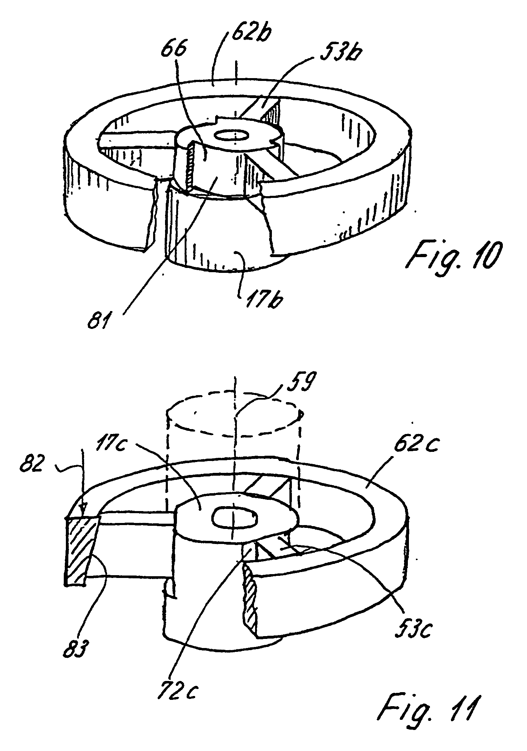

Figur 10 zeigt ein weiteres Ausführungsbeispiel, bei dem die Hülse 17b im Anlagebereich der Strombrücken 53b exzentrisch ausgebildet ist. In diesem Falle können die Strombrücken einen beliebigen Querschnitt aufweisen.
Vor dem Montagevorgang, bei dem das freie Ende 13 des Heizleiters 12 mit dem freien Ende 16 der Hülse 17b verbunden wird, wird die Hülse so verdreht, daß die exzentrischen Flächen 81 die Strombrücken 53b zwischen sich und dem Stromverteiler 62b einspannen.

Figur 11 zeigt ein Ausführungsbeispiel, bei dem die Strombrücken 53c zwischen der Hülse 17c und dem Stromverteiler 62c dadurch verkeilt werden, indem der Stromverteiler mit einer im spitzen Winkel zur Längsachse 59 geneigten Innenfläche 83 ausgestattet ist und durch axiales Verschieben in Richtung des Pfeiles 82 die Verkeilung erfolgt. Auch in diesem Ausführungsbeispiel erfahren die Strombrücken infolge der elastischen Verformbarkeit der Stromverteiler den erforderlichen Kontaktdruck.

Es liegt im Rahmen der Erfindung, die Verkeilung durch eine zylindrische Ausbildung der Innenfläche des Stromverteilers und geneigten Außenflächen der Hülse herbeizuführen.

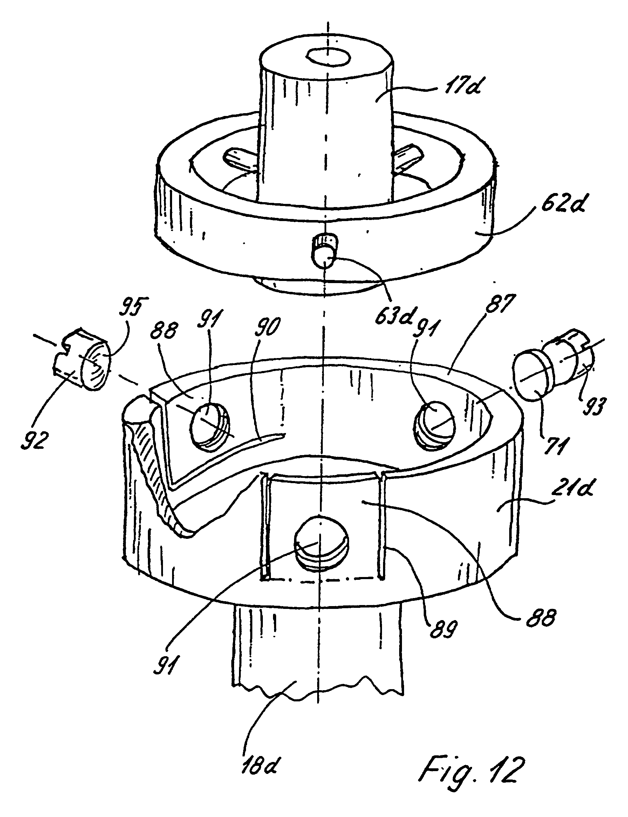

In der Fig. 12 ist ein weiteres Ausführungsbeispiel dargestellt. Man erkennt einen Flansch 21d, von dem ein Teil der Hülse 18d zu sehen ist und die äußere, die ringförmige Nut 85 in den Fig. 6 und 7 nach außen begrenzende Wandung 87. Weiteres Einzelheiten sind zur besseren Übersicht nicht dargestellt.
An der äußeren Wandung 87 des Flansches sind drei verschiedene Ausführungsformen des Flansches zur Erzielung eines elastischen Kontaktdruckes der Strombrücken an der Hülse 17d dargestellt.

In diesen Ausführungsbeispielen hat der Stromverteiler 62d nicht mehr die zusätzliche Aufgabe, die Strombrücken gegen die Hülse 17d zu drücken, sondern nur die Aufgabe, den Strom an die Strombrücken 53d zu leiten. Der Kontaktdruck auf die Strombrücken an die Hülse wird z.B. durch eine in eine Gewindebohrung 91 der Wandung 87 eingeschraubten Schraube 92 o.dgl. ausgeübt, wobei die Gewindebohrungen 91 in aus der Wandung freigeschnittenen Lappen 88 ausgebildet sind, die so in begrenztem Umfange federelastisch sind. Es ist dabei unerheblich, ob die Freischneidung durch parallel verlaufende Nuten 88 oder winkelförmig verlaufende Nuten 90 erfolgt. Es liegt auch im Rahmen der Erfindung, auf die Trennuten zu verzichten und vor der Schraube 93 ein federndes Mittel 71, z.B. eine Tellerfeder anzuordnen, um den Kontaktdruck elastisch auszuführen.

Es sei noch erwähnt, daß die Strombrücken sowohl von den Schrauben als auch dem federnden Mittel elektrisch isoliert sind.

Es liegt für spezielle Anwendungsfälle einer solchen Heizeinrichtung im Rahmen der Erfindung, die freien Enden 79,84 der Strombrücken stoffschlüssig, z.B. durch Verlöten, mit den korrespondierenden Kontaktflächen der Hülse 17 zu verbinden. Hierdurch wird ein guter Kontakt hergestellt. Eine Möglichkeit eine solche Verbindung herzustellen ist, unter Verwendung entsprechender Lote u.dgl. die Heizeinrichtung impulsartig mit einem höheren Strom zu beaufschlagen als der normale Betriebsstrom, um so die zum Lötvorgang notwendige Hitze zu erzeugen.

## Patentansprüche

1. Heißkanalabschnitt, insbesondere Heißkanaldüse für eine Spritzgießmaschine oder Kunststoffspritzgießform,
a) bestehend aus einem zentral angeordneten Heizstab (12),
b) der von einer geteilten Hülse (17, 18) umgeben ist,
c) wobei zwischen dem Heizstab (12) und der geteilten Hülse (17, 18) eine elektrische Isolierung angeordnet ist und der Heizstab (12) und jeweils ein Ende der Hülsen (17, 18) an ihren freien Enden elektrisch miteinander verbunden sind,
d) wobei die aufeinander zu gerichteten Enden der Hülsen (17, 18) zur Einspeisung von elektrischem Strom geeignet sind, und
e) wobei an den zueinander gerichteten Enden (19,20) der Hülsen (17, 18) ein ein- oder mehrstückiger Flansch (21, 21d, 30) ausgebildet ist, welcher mindestens eine Durchtrittsöffnung (55, 38, 38a) für die Schmelze aufweist,
**dadurch gekennzeichnet, dass**
f) die Wandung der Durchtrittsöffnung (55, 38, 38a) des Flansches (21, 21d, 30) über die gesamte Länge der Durchtrittsöffnung (55, 38, 38a) ausschließlich aus metallischem Werkstoff besteht.

2. Heißkanalabschnitt nach Anspruch 1, **dadurch gekennzeichnet, daß** die Durchtrittsöffnung (55) radial ausgebildet und von einem Steg (58) unterbrochen ist.

3. Heißkanalabschnitt nach Anspruch 1 oder 2, **dadurch gekennzeichnet, daß** mindestens zwei Durchtrittsöffnungen (55) ausgebildet sind, die von Stegen (58) getrennt sind.

4. Heißkanalabschnitt nach Anspruch 2 oder 3, **dadurch gekennzeichnet, daß** zwischen den im Abstand zueinander angeordneten Durchtrittsöffnungen (55) Stege (58) ausgebildet sind, in denen senkrecht zur Längsachse (59) verlaufende Kanäle (60) angeordnet sind, die elektrisch isoliert Strombrücken (61) aufnehmen, die einerseits mit der Hülse (17) und andererseits mit dem Stromverteiler (62) leitend verbunden sind.

5. Heißkanalabschnitt nach Anspruch 4, **dadurch gekennzeichnet, daß** die Strombrücken (61) schraubenartig ausgebildet sind und mit ihrem Gewinde (73) in einem im radialen Abstand zur Hülse (17) angeordneten, diese ganz oder teilweise umgebenden Stromverteiler (62) eingeschraubt sind und das freie Ende (72) der Strombrücken an der Hülse, einen elektrischen Kontakt bildend, anliegt.

6. Heißkanalabschnitt nach Anspruch 5, **dadurch gekennzeichnet, daß** der die Hülse (17) im Abstand umgebende Stromverteiler (62) durch das Einschrauben der Strorübrücken elastisch verformbar ist und hierdurch die Strombrücken kraftschlüssig gegen den Heizkörper gepreßt werden.

7. Heißkanalabschnitt nach Anspruch 4, **dadurch gekennzeichnet, daß** die den Strombrücken (53b) zugewandte Kontakt- und Mantelfläche (66) der Hülse (17b) exzentrisch ausgebildet ist, wobei durch Verdrehen der Hülse relativ zum Stromverteiler die Strombrücken zwischen Hülse (17b) und Stromverteiler (53b) elastisch verspannbar sind.

8. Heißkanalabschnitt nach Anspruch 4, **dadurch gekennzeichnet, daß** die der Hülse (17c) zugewandte Innenfläche (83) des Stromverteilers (62c) im spitzen Winkel zur Längsachse (59) der Heißkanaldüse verläuft und durch axiales Verschieben des Stromverteilers relativ zur Hülse die Strombrücken zwischen dem Heizkörper und dem Stromverteiler verkeilbar sind.

9. Heißkanalabschnitt nach Anspruch 4, **dadurch gekennzeichnet, daß** die dem Stromverteiler zugewandte Außenfläche, der Hülse im spitzen Winkel zur Längsachse (59) der Heißkanaldüse verläuft und durch axiales Verschieben des Stromverteilers, die Strombrücken zwischen dem Heizkörper und dem Stromverteiler verkeilbar sind.

10. Heißkanalabschnitt nach Anspruch 4, **dadurch gekennzeichnet, daß** der Stromverteiler durch seine elastische Verformbarkeit den Kontaktdruck herbeiführt.

11. Heißkanalabschnitt nach Anspruch 4, **dadurch gekennzeichnet, daß** Strombrükken im Stromverteiler elektrisch leitend gelagert sind, aus dem Flansch freigeschnittene Wandteile Gewindebohrungen aufweisen, in die mit den Strombrükken fluchtende Schrauben einschraubbar sind und die durch ihre Einschraubtiefe den Kontaktdruck bestimmen.

12. Heißkanalabschnitt nach Anspruch 1, **dadurch gekennzeichnet, daß** die äußere Wandung des Flansches (21d) eine Gewindebohrung (91) aufweist, die eine Gewindeschraube (93) aufnimmt und dass zwischen der Schraube und der Strombrücke ein federelastisches Mittel (71), z.B. eine Tellerfeder angeordnet ist.

13. Heißkanalabschnitt nach Anspruch 12, **dadurch gekennzeichnet, daß** zwischen den Berührungsflächen (95) der Schrauben und den Strombrücken elektrisch isolierende Mittel vorgesehen sind.

14. Heißkanalabschnitt nach einem oder mehreren der vorherigen Ansprüche, **dadurch gekennzeichnet, daß** die freien Enden der Strombrücken stoffschlüssig mit den korrespondierenden Kontaktflächen der Hülse (17) verbunden sind.

15. Heißkanalabschnitt nach Anspruch 1, **dadurch gekennzeichnet, daß** die gesamte Länge der Durchtrittsöffnung (55) ununterbrochen vom gleichen Werkstoff gebildet wird.

16. Heißkanalabschnitt nach Anspruch 1, **dadurch gekennzeichnet, dass** die erste Hülse (17) elektrisch isoliert von einem Mantelflansch (30,30a,30b) umfasst ist, dessen dem Flansch (21) der zweiten Hülse (18) zugewandte Stirnfläche stoffschlüssig mit der Stirnfläche des Flansches (21) der zweiten Hülse verbunden ist.

17. Heißkanalabschnitt nach Anspruch 16, **dadurch gekennzeichnet, dass** die Flansche der zwei Hülsen (17, 18) im Bereich der verlöteten Flächen mit mindestens einem sie in Strömungsrichtung durchdringenden Durchströmkanal (38,38a) als der Durchtrittsöffnung (55) für die Schmelze ausgestattet sind, dessen Wandung im Bereich der Flansche ausschließlich von dem metallischem Werkstoff gebildet wird.

18. Heißkanalabschnitt nach Anspruch 16 oder 17, **dadurch gekennzeichnet, daß** die Hülse (17) an ihrem dem Flansch (21) zugewandten Ende mindestens eine nach außen weisende Strombrücke (22,22a,22b) aufweist, die mit einem Verbindungsmittel (25) verbunden ist.

19. Heißkanalabschnitt nach Anspruch 16 und 17, **dadurch gekennzeichnet, daß** die Strombrücke eine elektrische Verbindung zwischen der Hülse (17) und einem ganz oder teilweise umlaufenden Verteilerring (23,23a) bilden und daß der Verteilerring mit dem Verbindungsmittel (25) elektrisch verbunden ist.

20. Heißkanalabschnitt nach einem der vorhergehenden Ansprüche 17 bis 19, **dadurch gekennzeichnet, daß** der Außenmantel der Hülse (17) und der Innendurchmesser des Verteilerringes und seitliche Flächen der Strombrücken Durchbrechungen (31) bilden, durch die die den Mantelflansch (30) und den Flansch (21) der Hülse (18) verbindende Durchströmkanäle (33) mit ihren Wandungen (32) hindurchragen.

21. Heißkanalabschnitt nach Anspruch 20, **dadurch gekennzeichnet, daß** die Ausnehmung (27,28,29) im Mantelflansch (30) der Form von Hülse (17), Strombrücke (22) und Verteilerring (23) entsprechen, wobei zwischen den sich gegenüberliegenden Flächen eine elektrische Isolierung angeordnet ist.

22. Heißkanalabschnitt nach Anspruch 17, **dadurch gekennzeichnet, daß** der Mantelflansch (30) die Hülse (17), die Strombrücke (22) und den Verteilerring (23) bis auf die dem Flansch (21) zugewandten Flächen nahezu vollständig umschließt.

23. Heißkanalabschnitt nach einem oder mehreren der vorstehenden Ansprüche 17 bis 22, **dadurch gekennzeichnet, daß** eine Endkappe die freien Enden (13) und (16) umschließt

24. Heißkanalabschnitt nach Anspruch 16, **dadurch gekennzeichnet, daß** die Kanalbschnitte (43) als separate Bauteile ausgeführt sind und ihre Außenkontur der Kontur der Durchbrechungen (31) entspricht, wobei die sich benachbarten Flächen elektrisch zueinander isoliert sind.

25. Heißkanalabschnitt nach Anspruch 24, **dadurch gekennzeichnet, dass** die Stirnflächen (45, 46) der Kanalabschnitte (43) mit den benachbarten Flanschen (38, 40) stoffschlüssig verbunden sind.

26. Heißkanalabschnitt nach Anspruch 16 oder 25, **dadurch gekennzeichnet, dass** die stoffschlüssige Verbindung durch Verlöten erfolgt ist.

## Claims

1. Hot runner section, in particular hot runner nozzle for an injection moulding machine or plastics injection mould,
a) comprising a centrally arranged heating rod (12),
b) which is surrounded by a split sleeve (17, 18),
c) an electrical insulation being arranged between the heating rod (12) and the split sleeve (17, 18), and the heating rod (12) and in each case one end of the sleeves (17, 18) being electrically connected to one another at their free ends,
d) those ends of the sleeves (17, 18) which are directed towards one another being suitable for feeding in electric current, and
e) a single-part or multipart flange (21, 21d, 30), which has at least one passage opening (55, 38, 38a) for the melt, being formed at the mutually facing ends (19, 20) of the sleeves (17, 18),
**characterized in that**
f) the wall of the passage opening (55, 38, 38a) in the flange (21, 21d, 30) consists exclusively of metallic material over the entire length of the passage opening (55, 38, 38a).

2. Hot runner section according to Claim 1, **characterized in that** the passage opening (55) is formed radially and is interrupted by a web (58).

3. Hot runner section according to Claim 1 or 2, **characterized in that** at least two passage openings (55), which are separated by webs (58), are formed.

4. Hot runner section according to Claim 2 or 3, **characterized in that** webs (58) are formed between the passage openings (55), which are arranged at a distance from one another, in which webs there are channels (60) which run perpendicular to the longitudinal axis (59) and accommodate current links (61) in an electrically insulated fashion, which links are conductively connected on one side to the sleeve (17) and on the other side to the current distributor (62).

5. Hot runner section according to Claim 4, **characterized in that** the current links (61) are helical in form and are screwed by means of their screw thread (73) into a current distributor (62), which is arranged at a radial distance from the sleeve (17) and partially or completely surrounds the latter, and the free end (72) of the current links bears against the sleeve, so as to make electrical contact.

6. Hot runner section according to Claim 5, **characterized in that** the current distributor (62), which surrounds the sleeve (17) at a distance, can be elastically deformed as a result of the current links being screwed in, and as a result the current links are pressed nonpositively onto the heating body.

7. Hot runner section according to Claim 4, **characterized in that** the contact and lateral surface (66), facing the current links (53b), of the sleeve (17b) is formed eccentrically, it being possible for the current links to be elastically clamped between sleeve (17b) and current distributor (53b) through rotation of the sleeve relative to the current distributor.

8. Hot runner section according to Claim 4, **characterized in that** the inner surface (83), facing the sleeve (17c), of the current distributor (62c) runs at an acute angle to the longitudinal axis (59) of the hot runner nozzle, and the current links can be wedged between the heating body and the current distributor through axial displacement of the current distributor relative to the sleeve.

9. Hot runner section according to Claim 4, **characterized in that** the outer surface, facing the current distributor, of the sleeve runs at an acute angle to the longitudinal axis (59) of the hot runner nozzle, and the current links can be wedged between the heating body and the current distributor through axial displacement of the current distributor.

10. Hot runner section according to Claim 4, **characterized in that** the current distributor brings about the contact pressure by virtue of its elastic deformability.

11. Hot runner section according to Claim 4, **characterized in that** current links are mounted electrically conductively in the current distributor, wall parts which have been cut through from the flange have threaded bores, into which screws aligned with the current links can be screwed and which determine the contact pressure by means of their screw-in depth.

12. Hot runner section according to Claim 1, **characterized in that** the outer wall of the flange (21d) has a threaded bore (91), which accommodates a threaded screw (93), and **in that** an elastic means (71), e.g. a disc spring, is arranged between the screw and the current link.

13. Hot runner section according to Claim 12, **characterized in that** electrically insulating means are provided between the bearing surfaces (95) of the screws and the current links.

14. Hot runner section according to one of more of the preceding claims, **characterized in that** the free ends of the current links are cohesively connected to the corresponding contact surfaces of the sleeve (17).

15. Hot runner section according to Claim 1, **characterized in that** the entire length of the passage opening (55) is formed by the same material without interruption.

16. Hot runner section according to Claim 1, **characterized in that** the first sleeve (17) is surrounded in an electrically insulated manner by a lateral flange (30, 30a, 30b), whose end face which faces the flange (21) of the second sleeve (18) is cohesively connected to the end face of the flange (21) of the second sleeve.

17. Hot runner section according to Claim 16, **characterized in that** the flanges of the two sleeves (17, 18), in the region of the soldered surfaces, are equipped with at least one through-flow channel (38, 38a) penetrating through them in the direction of flow, as the passage opening (55) for the melt, the wall of which channel, in the region of the flanges, is formed exclusively by the metallic material.

18. Hot runner section according to Claim 16 or 17, **characterized in that** the sleeve (17), at its end facing the flange (21) has at least one outwardly facing current link (22, 22a, 22b), which is connected to a connecting means (25).

19. Hot runner section according to Claims 16 and 17, **characterized in that** the current links form an electrical connection between the sleeve (17) and a completely or partially encircling distributor ring (23, 23a), and **in that** the distributor ring is electrically connected to the connecting means (25).

20. Hot runner section according to one of the preceding claims 17 to 19, **characterized in that** the outer lateral surface of the sleeve (17) and the internal diameter of the distributor ring and lateral surfaces of the current links form apertures (31), through which the walls (32) of the through-flow channels (33) connecting the lateral flange (30) and the flange (21) of the sleeve (18) project.

21. Hot runner section according to Claim 20, **characterized in that** the recess (27, 28, 29) in the lateral flange (30) corresponds to the shape of the sleeve (17), current link (22) and distributor ring (23), with an electrical insulation being arranged between the mutually opposite surfaces.

22. Hot runner section according to Claim 17, **characterized in that** the lateral flange (30) virtually completely surrounds the sleeve (17), the current link (22) and the distributor ring (23), apart from the surfaces facing the flange (21).

23. Hot runner section according to one or more of the preceding Claims 17 to 22, **characterized in that** an end cap surrounds the free ends (13) and (16).

24. Hot runner section according to Claim 16, **characterized in that** the channel sections (43) are designed as separate components, and their outer contour corresponds to the contour of the apertures (31), with the mutually adjacent surfaces being electrically insulated from one another.

25. Hot runner section according to Claim 24, **characterized in that** the end faces (45, 46) of the channel sections (43) are cohesively connected to the adjacent flanges (38, 40).

26. Hot runner section according to Claim 16 or 25, **characterized in that** the cohesive connection is effected by soldering.

## Revendications

1. Portion de canal chaud, en particulier buse de portion de canal chaud pour une machine à mouler par injection ou moule d'injection de matières plastiques,
a) comprenant une barre de chauffage agencée centralement (12),
b) qui est entourée par une douille divisée (17, 18),
c) une isolation électrique étant disposée entre la barre de chauffage (12) et la douille divisée (17, 18) et la barre de chauffage (12) et respectivement une extrémité des douilles (17, 18) étant à leurs extrémités libres reliées entre elles électriquement,
d) les extrémités orientées l'une au-dessus de l'autre des douilles (17, 18) étant adaptées pour l'alimentation de courant électrique, et
e) une flasque en une ou plusieurs parties (21, 21d, 30), qui comporte au moins un orifice de passage (55, 38, 38a) destinée à la coulée, étant réalisée aux extrémités opposées (19, 20) des douilles (17, 18),
**caractérisé en ce que**
f) la paroi de l'orifice de passage (55, 38, 38a) de la flasque (21, 21d, 30) sur toute la longueur de l'orifice de passage (55, 38, 38a) est composée essentiellement à base d'un matériau métallique.

2. Portion de canal chaud selon la revendication 1, **caractérisé en ce que** l'orifice de passage (55) est réalisé radialement et est interrompu par une barrette (58).

3. Portion de canal chaud selon la revendication 1 ou 2, **caractérisé en ce qu'**au moins deux orifices de passage (55) sont réalisés, qui sont séparés par des barrettes (58).

4. Portion de canal chaud selon la revendication 2 ou 3, **caractérisé en ce qu'**entre les orifices de passage (55) disposés avec un écartement l'un par rapport à l'autre sont réalisées des barrettes (58), dans lesquelles sont disposés des canaux (60) s'étendant perpendiculairement à l'axe longitudinal (59), qui reçoivent des montages en pont (61) de manière isolée électriquement, lesquels sont reliés en conduction électrique à la douille (17), d'une part, et au distributeur de courant (62), d'autre part.

5. Portion de canal chaud selon la revendication 4, **caractérisé en ce que** les montages en pont (61) sont réalisés en forme de visserie et sont insérés par leur filetage (73) dans un distributeur de courant (62) disposé selon un écartement radial par rapport à la douille (17), en entourant celle-ci en totalité ou en partie et **en ce que** l'extrémité libre (72) des montages en pont est contiguë à la douille, formant un contact électrique.

6. Portion de canal chaud selon la revendication 5, **caractérisé en ce que** le distributeur de courant (62) entourant avec un écartement la douille (17) est déformable élastiquement par l'insertion vissée des montages en pont, et qu'ainsi les montages en pont sont pressés de façon forcée contre l'organe de chauffage.

7. Portion de canal chaud selon la revendication 4, **caractérisé en ce que** la robe et surface de contact (66) de la douille (17b) opposée aux montages en pont (53b) est réalisée excentriquement, les montages en pont pouvant être serrés élastiquement entre la douille (17b) et le distributeur de courant (53b) du fait de la torsion de la douille relativement au distributeur de courant.

8. Portion de canal chaud selon la revendication 4, **caractérisé en ce que** la surface intérieure (83), opposée à la douille (17c), du distributeur de courant (62c) s'étend en angle en pointe par rapport à l'axe longitudinal (59) de la buse de canal chaud et avec le déplacement axial du distributeur de courant relativement à la douille, les montages en pont peuvent être coincés entre l'organe de chauffage et le distributeur de courant.

9. Portion de canal chaud selon la revendication 4, **caractérisé en ce que** la surface extérieure opposée au distributeur de courant, de la douille s'étend en angle en pointe par rapport à l'axe longitudinal (59) de la buse de canal chaud et avec le déplacement axial du distributeur de courant, les montages en pont peuvent être coincés entre l'organe de chauffage et le distributeur de courant.

10. Portion de canal chaud selon la revendication 4, **caractérisé en ce que** le distributeur de courant entraîne la pression en contact de par sa déformabilité élastique.

11. Portion de canal chaud selon la revendication 4, **caractérisé en ce que** les montages en pont sont placés en position de conductibilité électrique dans le distributeur de courant, que des parties de paroi découpées de façon non guidée à partir de la flasque comportent des perçages filetés, dans lesquels peuvent être vissées des vis en alignement avec les montages en pont, et qui définissent la pression de contact par leur profondeur de filetage.

12. Portion de canal chaud selon la revendication 1, **caractérisé en ce que** la paroi extérieure de la flasque (21d) comporte un perçage taraudé (91), qui reçoit une vis filetée (93), et **en ce qu'**un moyen à déformation élastique (71), par exemple une rondelle-ressort, est disposé entre la vis et le montage en pont.

13. Portion de canal chaud selon la revendication 12, **caractérisé en ce qu'**entre les surfaces de contact (95) de visserie et les montages en pont des moyens d'isolation électrique sont prévus.

14. Portion de canal chaud selon l'une ou plusieurs quelconque(s) des revendications précédentes, **caractérisé en ce que** les extrémités libres des montages en pont sont reliées par fusion de la matière avec les surfaces de contact correspondantes de la douille (17).

15. Portion de canal chaud selon la revendication 1, **caractérisé en ce que** la longueur totale de l'orifice de passage (55) est formée uniformément du même matériau.

16. Portion de canal chaud selon la revendication 1, **caractérisé en ce que** la première douille (17) est entourée de façon isolée électriquement par une robe (30, 30a, 30b) dont la face frontale opposée à la flasque (21) de la seconde douille (18) est reliée par fusion de la matière à la face frontale de la flasque (21) de la seconde douille.

17. Portion de canal chaud selon la revendication 16, **caractérisé en ce que** la flasque des deux douilles (17, 18) est pourvue dans la zone des surfaces brasées d'au moins un canal d'écoulement (38, 38a) la traversant dans le sens d'écoulement comme l'orifice de traversée (55) pour la coulée, dont la paroi dans la zone de la flasque est formée exclusivement du matériau métallique.

18. Portion de canal chaud selon la revendication 16 ou 17, **caractérisé en ce que** la douille (17) comporte à son extrémité opposée à la flasque (21) au moins un montage en pont (22, 22a, 22b) orienté vers l'extérieur, qui est relié avec un moyen de liaison (25).

19. Portion de canal chaud selon la revendication 16 ou 17, **caractérisé en ce que** les montages en pont forment une liaison électrique entre la douille (17) et une bague distributrice (23, 23a) totalement ou partiellement circulaire et que la bague conductrice est reliée électriquement avec le moyen de liaison (25).

20. Portion de canal chaud selon l'une quelconque des revendications précédentes 17 à 19, **caractérisé en ce que** la robe extérieure de la douille (17) et le diamètre intérieur de la bague distributrice et des surfaces latérales des montages en pont forment des trouées (31) à travers lesquelles les canaux d'écoulement (33) reliant la robe (30) et la flasque (21) de la douille (18), pénètrent avec leurs parois (32).

21. Portion de canal chaud selon la revendication 20, **caractérisé en ce que** l'évidement (27, 28, 29) dans la robe (30) correspond à la forme de la douille (17), des montages en pont (22) et de la bague conductrice (23), une isolation électrique étant disposée entre les surfaces s'opposant les unes aux autres.

22. Portion de canal chaud selon la revendication 17, **caractérisé en ce que** la robe (30) enferme pratiquement en totalité la douille (17), le montage en pont (22), et la bague distributrice (23) jusqu'aux surfaces opposées à la flasque (21).

23. Portion de canal chaud selon l'une ou plusieurs quelconque(s) des revendications précédentes 17 à 22, **caractérisé en ce qu'**une ogive enferme les extrémités libres (13) et (16).

24. Portion de canal chaud selon la revendication 16, **caractérisé en ce que** les canaux chauds (43) sont réalisés en tant que composants séparés et leur pourtour extérieur correspond au pourtour des trouées (31), les surfaces voisines entre elles étant isolées électriquement les unes par rapport aux autres.

25. Portion de canal chaud selon la revendication 24, **caractérisé en ce que** les surfaces frontales (45, 46) des portions de canal chaud (43) sont reliées par fusion de la matière avec les flasques voisines (38, 40).

26. Portion de canal chaud selon la revendication 16 ou 25, **caractérisé en ce que** la liaison par fusion de la matière est obtenue par brasure.
